# FASCICULE DE BREVET EUROPEEN

(11) **EP 1 679 230 B1**
(45) Date de publication et mention de la délivrance du brevet: **12.11.2008**
(21) Numéro de dépôt: 06290007.1
(22) Date de dépôt: 04.01.2006
(51) Int. Cl.: B60R 9/045

(54) **Dispositif de fixation d'un accessoire de portage sur un fixe au toit**
Befestigung für eine Tragvorrichtung auf einem Dachgepäckträger
Device for fixing a carring accessory on a roof rack

(30) Priorité: 06.01.2005 FR 0500113
(43) Date de publication de la demande: 12.07.2006
(73) Titulaire: Automaxi International, 35400 Saint Malo (FR)
(72) Inventeur: Deniaud, Mickaël, 35400 Saint Malo (FR)
(74) Mandataire: Thinat, Michel

(56) Documents cités:
- WO-A-00/76808

## Description

L'invention concerne un dispositif de fixation pour un accessoire de portage, ce dispositif permettant notamment de fixer un accessoire de portage sur une barre de toit d'un véhicule automobile.

Le dispositif de l'invention permet plus particulièrement de fixer un accessoire de portage tel un coffre de toit, sur tout type de barre de toit, et cela en n'ayant plus besoin d'actionner individuellement chacune des pattes de fixation, également appelées ci-après brides de fixation, de l'accessoire de portage. Le dispositif de fixation est par ailleurs conçu de manière à pouvoir être monté sur les barres de toit d'un véhicule automobile sans outil.

En général, des accessoires de portage tels des coffres de toit destinés à être montés sur le toit d'un véhicule automobile, sont pourvus de brides de fixation sous forme de pieds conformés pour saisir une barre de toit à la façon d'une pince. Ces pieds doivent alors être bloqués individuellement dans leur position de fixation par des boulons ou par des mécanismes de vissage.

En ce qui concerne des accessoires de portage se fixant sur des barres à rainures en T, ceux-ci ne comportent généralement que de simples trous permettant le passage d'une vis en T dans chacun des trous, les vis étant fixées individuellement avec un écrou, souvent incorporé dans un bouton moleté.

Les accessoires de portage réalisés selon ces conceptions ou comportant des systèmes de fixation plus spécifiques présentent l'inconvénient que leur utilisateur doit intervenir sur chacun des pieds pour fixer l'accessoire de portage sur les barres de toit d'un véhicule. Ainsi, lorsque le véhicule se trouve en stationnement le long d'une chaussée, l'utilisateur est obligé de s'exposer au risques de la circulation pendant qu'il fixe les pieds d'un côté des barres, ou de déplacer le véhicule après avoir fixé le côté sécurisé des barres de manière à pouvoir se mettre à l'abri de tels risques pour le travail sur l'autre côté.

De plus, dans de nombreux cas, malgré le serrage fort requis pour les dispositifs de fixation utilisés à ce jour, les efforts que ceux-ci subissent pendant leur utilisation peuvent les faire glisser sur la barre et engendrer ainsi un désalignement entre la partie de l'accessoire fixée sur une première barre de toit du véhicule et celle fixée sur une seconde barre de toit du véhicule.

Un tel cas est connu du document WO-A-00/76808 qui décrit un dispositif de fixation permettant de fixer une barre destinée à porter un poids, sur la barre de toit d'un véhicule automobile, conformément au préambule de la revendication 1. Ce dispositif connu comporte une première et une seconde brides de fixation ayant chacune une extrémité inférieure libre et une extrémité supérieure accrochée dans la barre destinée à porter un poids. De cette manière, les extrémités supérieures des brides de fixation sont disposées l'une de l'autre à une distance constante. Le dispositif de fixation connu comprend par ailleurs des moyens de serrage permettant ensemble, avec les brides de fixation, de fixer la barre de portage sur une barre de toit par interaction entre les extrémités inférieures libres des brides de fixation et la barre de toit. Les première et seconde brides de fixation sont liées l'une à l'autre par une barre de serrage faisant partie des moyens de serrage. La barre de serrage est disposée entre les extrémités supérieures accrochées à la barre de portage et les extrémités libres inférieures.

Le but de l'invention est de proposer un dispositif de fixation permettant un montage plus facile, si possible aussi plus rapide, d'un accessoire de portage sur les barres de toit d'un véhicule automobile.

Le but de l'invention est atteint avec un dispositif de fixation ayant les caractéristiques de la revendication 1.

Conformément à l'invention, le dispositif de fixation comprend un corps principal traversé par les première et seconde brides de fixation, les première et seconde brides de fixation étant reliées l'une à l'autre, à leurs extrémités supérieures, par une barre de serrage faisant partie des moyens de serrage et étant conformée pour obtenir respectivement la fixation et le démontage de l'accessoire de portage en faisant varier la distance, ou l'espacement, entre les extrémités supérieures des première et seconde brides de fixation et en faisant ainsi arc-bouter les brides de fixation pour obtenir leur fixation et défaire l'arc-boutement pour leur démontage.

Grâce à cette disposition de l'invention, l'utilisateur d'un tel dispositif de fixation est en mesure de fixer les deux brides de fixation d'un dispositif de fixation par une seule manipulation ou, de manière générale, de fixer les brides de fixation d'un accessoire de portage ayant deux ou davantage de dispositifs de fixation selon l'invention, par paires.

De plus, le dispositif de l'invention peut être utilisé aussi bien sur des véhicules automobiles ayant des barres de toit disposées dans le sens longitudinal du véhicule que sur des véhicules ayant des barres de toit transversales par rapport à ce sens. Selon l'orientation (parallèle ou transversale) du dispositif de fixation, ou de chacun des dispositifs de fixation, d'un accessoire de portage par rapport à l'orientation des barres de toit du véhicule, le ou chacun des dispositifs de fixation est monté sur une même barre ou sur deux barres différentes.

Dans chacun de ces deux cas, l'utilisateur d'un véhicule sur lequel il souhaite monter, par exemple, un coffre de toit ayant quatre brides de fixation, est en mesure d'orienter les deux dispositifs comportant ces quatre brides de manière que les moyens de serrage soient accessibles sur le même côté du véhicule, par exemple à partir d'un trottoir le long lequel le véhicule est stationné.

Un autre avantage du dispositif de l'invention réside dans le fait qu'il peut être utilisé pour tout type de barres de toit, quelle que soit leur section transversale.

Ces avantages sont obtenus par le fait que le serrage du dispositif de l'invention sur une barre de toit s'effectue par un effet d'arc-boutement obtenu par une action simultanée de basculement et de pincement des brides de fixation du dispositif de fixation. De plus, le dispositif de fixation comprend avantageusement des pattes de fermeture, une telle patte étant associée à chaque bride de fixation de manière à pouvoir entourer, et ainsi enfermer, les barres de toit par des ensembles bride/patte de fixation.

Le dispositif de fixation selon l'invention peut être utilisé aussi bien pour fixer des accessoires de portage sur des barres de toit pleines que pour la fixation d'accessoires de portage sur des barres de toit pourvues d'une rainure en T. Dans ce dernier cas, les brides de fixation et les pattes de fermeture conformées pour entourer, et ainsi enfermer, les barres de toit sont remplacées par deux brides en U et deux vis chariot.

Le dispositif de l'invention a par ailleurs, selon le mode de réalisation choisi, également l'une au moins des caractéristiques ci-après, considéré isolément ou selon toutes leurs combinaisons techniquement possibles :
- la barre de serrage est au moins partiellement pourvue d'un filetage et présente une première extrémité sur laquelle est engagé un élément de manipulation pourvu d'un taraudage approprié, et une seconde extrémité solidaire d'un second coulisseau auquel est attachée pivotant une des deux brides de fixation, l'autre bride de fixation étant attachée à un premier coulisseau enfilé sur la barre de serrage ;
- le dispositif comprend deux pattes de fermeture destinées à coopérer avec les deux brides de fixation pour enfermer la barre de toit entre elles et les brides de fixation lorsque le dispositif de fixation est engagé sur la barre de toit ;
- l'élément de manipulation est un bouton conformé pour pouvoir être actionné à la main, sans outil ;
- le corps principal comprend une plaque de base sur laquelle se dressent deux supports dont chacun est pourvu d'un orifice destiné à loger la barre de serrage et d'une rampe sur laquelle se déplace la bride de fixation correspondante lors de l'actionnement des moyens de serrage pour faire basculer les brides de fixation ;
- le corps principal fait partie intégrante de l'accessoire de portage ;
- le corps principal est conformé pour être attaché de manière amovible à l'accessoire de portage ;
- les moyens de serrage sont conformés pour rapprocher les deux extrémités supérieures des brides de fixation l'une à l'autre afin d'obtenir la fixation de l'accessoire de portage et pour éloigner les deux extrémités l'une de l'autre afin d'obtenir le démontage de l'accessoire de portage.

Dans le dispositif de l'invention, les éléments de fixation, lorsqu'ils sont composés d'une bride de fixation et d'une patte de fermeture, forment une boucle fermée autour de la barre de toit, lorsque le dispositif de fixation est mis en place. Cette boucle s'ouvre en désolidarisant la bride de fixation et la patte de fermeture qui coulissent grâce à un trou oblong réalisé dans la plaque de base du corps principal du dispositif de fixation et qui libère ainsi un passage suffisant pour ôter le dispositif de fixation de la barre de toit. En boucle fermée, le serrage s'effectue en arc-boutant chacun des éléments de fixation. Puisque les mouvements de serrage sont réalisés par une tige filetée reliant les deux brides de fixation, ensemble avec les pattes de fixation correspondantes, on actionne les deux éléments de fixation intervenant sur une même barre de toit en un seul mouvement. Le serrage est d'autant plus efficace qu'il s'effectue, en partie, sur une arrête de la bride de fixation, cette dernière s'enfonçant légèrement dans la barre de toit et empêchant ainsi tout déplacement latéral.

Avantageusement, la barre de serrage possède un pas de filetage beaucoup plus grand que le pas standard. Ceci permet à l'élément de manipulation, par exemple au bouton conformé pour être tourné sans outil, de parcourir sur la barre de serrage une plus grande distance dans le sens de l'axe du filetage à chaque tour du bouton, accélérant ainsi l'arc-boutement des brides de fixation. Ensuite, des coulisseaux sur lesquels les brides de fixation et les pattes de fermeture se déplacent, glissent sur les cales pourvues de pentes, aménagées dans le corps principal et permettant ainsi simultanément à l'arc-boutement, de réduire rapidement le jeu entre la barre de toit et les brides de fixation.

Lors du démontage du dispositif de fixation, le retour des brides de fixation en position initiale est assurée par des ressorts de rappel. Il suffit ensuite de désengager la patte de fermeture de la bride de fixation correspondante et de la faire coulisser vers le haut, libérant ainsi le passage pour retirer le dispositif de fixation de la barre de toit.

Le dispositif de fixation selon l'invention peut être intégré à un accessoire de portage de deux manières différentes. Selon la première, le corps principal fait partie intégrante du bâti de cet accessoire de portage. Dans ce cas, les surfaces fonctionnelles présentées dans les dessins annexés sur le corps principal, sont des formes prévues directement sur ledit bâti.

Selon la seconde manière, le dispositif de fixation de l'invention est indépendant et est conformé pour venir se glisser, par exemple, dans des rainures prévues à cet effet, réalisées dans une partie inférieure de l'accessoire de portage.

D'autres caractéristiques et avantages de la présente invention ressortiront de la description ci-après de deux modes de réalisation. La description est faite en référence aux dessins dans lesquels :
- la figure 1 est une vue en perspective du dispositif de fixation selon un premier mode de réalisation de l'invention, le dispositif étant mis en place, mais non encore fixé, sur une barre de toit représentée en pointillés;
- la figure 2 est une vue en perspective du dispositif de la figure 1 en cours de mise en place sur une barre de toit ;
- la figure 3 est une vue en perspective du dispositif de la figure 1 mis en place et avec indication du mouvement de patte de fermeture destinée à enfermer la barre de toit dans le dispositif de l'invention ;
- la figure 4 est une vue latérale simplifiée montrant le mouvement d'engagement des pattes de fermeture dans les brides de fixation du dispositif de l'invention de la figure 1 ;
- la figure 5 est une vue en perspective du dispositif de l'invention de la figure 1 pendant le serrage avec indication des mouvements des différents éléments intervenant pendant le serrage du dispositif de fixation sur une barre de toit ;
- la figure 6 est une vue simplifiée en perspective du dispositif de l'invention de la figure 1 en position de serrage ; et
- la figure 7 est une coupe transversale du dispositif de l'invention selon un second mode de réalisation.

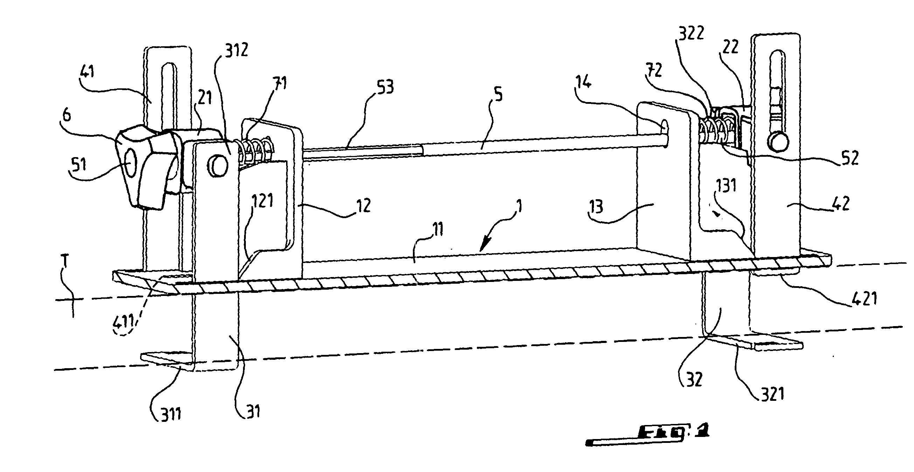

La figure 1 montre divers éléments d'un dispositif de fixation de l'invention réalisé selon un permier mode de réalisation et adapté à un montage du dispositif sur des barres de toit pleines, par opposition au second mode de réalisation adapté pour un montage du dispositif de l'invention sur des barres de toit pourvues d'une rainure en T.

Le dispositif de fixation représenté sur la figure 1 comporte un corps principal 1 formé par une plaque de base 11 et deux éléments de support 12, 13 se dressant sur la plaque de base 11. Chacun des supports 12, 13 est pourvu d'un orifice 14 destiné à loger une barre de serrage 5 dont la fonction est décrite plus loin.

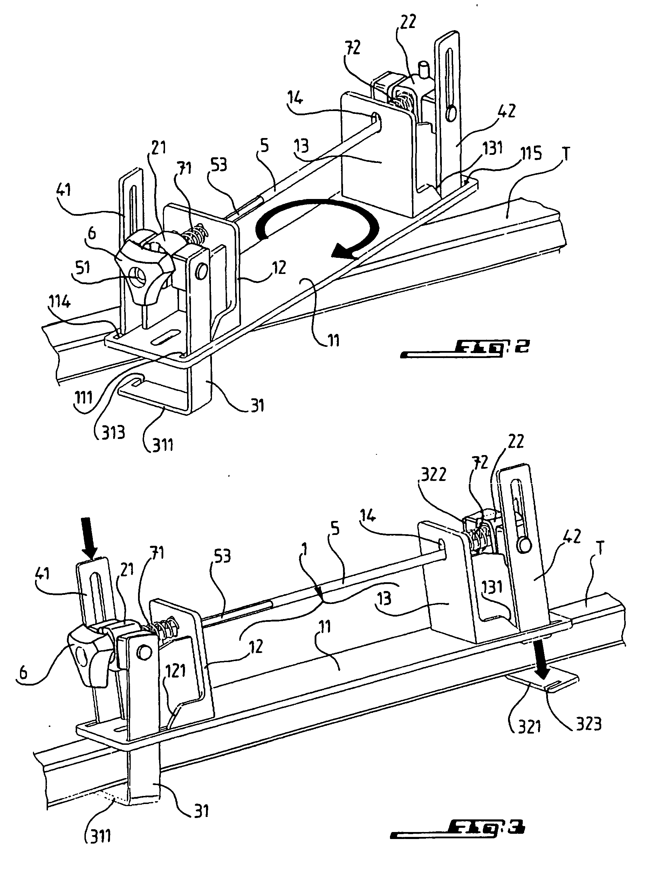

Le dispositif de fixation comporte également une première bride de fixation 31 et une seconde bride de fixation 32, ayant chacune une extrémité inférieure libre référencée respectivement 311 et 321 et une extrémité supérieure référencée respectivement 312 et 322. Les brides de fixation 31, 32 sont espacées l'une de l'autre et traversent chacune la plaque de base 11 dans des premiers trous oblongs 111, 112 pratiqués dans la plaque de base 11 à cet effet. Le dispositif comprend également des pattes de fermeture 41, 42 montées coulissantes dans des seconds trous oblongs 114, 115 (voir figure 2) pratiqués à cet effet dans la plaque de base 11.

Les brides de fixation 31, 32 et les pattes de fermeture 41, 42 sont reliées les unes aux autres par des coulisseaux 21, 22 engagés sur la, ou proche de la, extrémité correspondante de la barre de serrage 5 et, en tout cas, en dehors de l'espace défini entre les deux supports 12, 13.

Ainsi, la bride de fixation 31 et la patte de fermeture 41 sont attachées au premier coulisseau 21 qui est enfilé sur une première extrémité 51 de la barre de serrage 5. Un premier ressort 71 est intercalé entre le premier coulisseau 21 et le support 12. De manière analogue, la bride de fixation 32 et la patte de fermeture 42 sont attachées au second coulisseau 22 qui est enfilé sur une seconde extrémité 52 de la barre de serrage 5, avec un second ressort 72 interposé entre le second coulisseau 22 et le support 13. Le second coulisseau 22 est sécurisé sur l'extrémité 52 de la barre de serrage 5 avec des moyens appropriés pour éviter que la barre 5 puisse sortir de son engagement et pour empêcher toute rotation de la barre de serrage 5 dans le second coulisseau 22.

Contrairement à cela, le premier coulisseau 21, auquel sont attachées la bride de fixation 31 et la patte de fermeture 41, est enfilé sur la barre de serrage 5 de manière à permettre un coulissement axial du coulisseau 21 sur la barre de serrage 5 lors de l'actionnement du dispositif de l'invention respectivement pendant le montage et le démontage du dispositif de l'invention.

Afin de pouvoir actionner le dispositif de fixation selon le principe de la présente invention, la barre de serrage 5 est pourvue, au moins sur une partie de sa longueur axiale, d'un filetage 53 sur lequel est engagé le bouton 6 comportant un taraudage adéquat.

Pour monter le dispositif de fixation sur une barre de toit classique, on remonte, dans un premier temps, les pattes de fermeture 41, 42 pour qu'elles prennent les positions représentées sur les figures 1 et 2 afin de libérer un passage pour la barre de toit T. Ensuite, le dispositif de fixation est positionné en biais sur la barre de toit, comme cela est représenté sur la figure 2. Puis, on fait pivoter le dispositif de fixation pour l'aligner avec la barre de toit, cette dernière entrant alors dans les creux définis respectivement entre les extrémités inférieures 311 et 321 et la face inférieure de la plaque de base 11. Ce mouvement d'alignement est rendu possible par une dissymétrie des brides de fixation 31, 32. En effet, comme cela est visible par l'orientation des extrémités inférieures 311, 321 des brides de fixation 31, 32 et par la position des pattes de fermeture 41, 42 sur la plaque de base 11, ces quatre éléments sont montés en croisé, c'est-à-dire les trous oblongs 111, 112 dans lesquels les brides de fixation 31, 32 traversent la plaque de base 11 ne sont pas disposés au même bord de la plaque de base 11, mais diagonalement opposés. De manière analogue, les trous oblongs 113, 114 par lesquels les pattes de fermeture 41, 42 traversent la plaque de base 11 ne sont pas disposés non plus près du même bord de la plaque de base 11, mais sont disposés diagonalement opposés.

Grâce à cette configuration des brides de fixation 31, 32 et des pattes de fermeture 41, 42 ainsi que des supports 12, 13 décrits plus loin en plus de détails, le dispositif de fixation de l'invention comporte, sur la plaque de base 11, deux moyens de fixation identiques, mais disposés avec des orientations opposées.

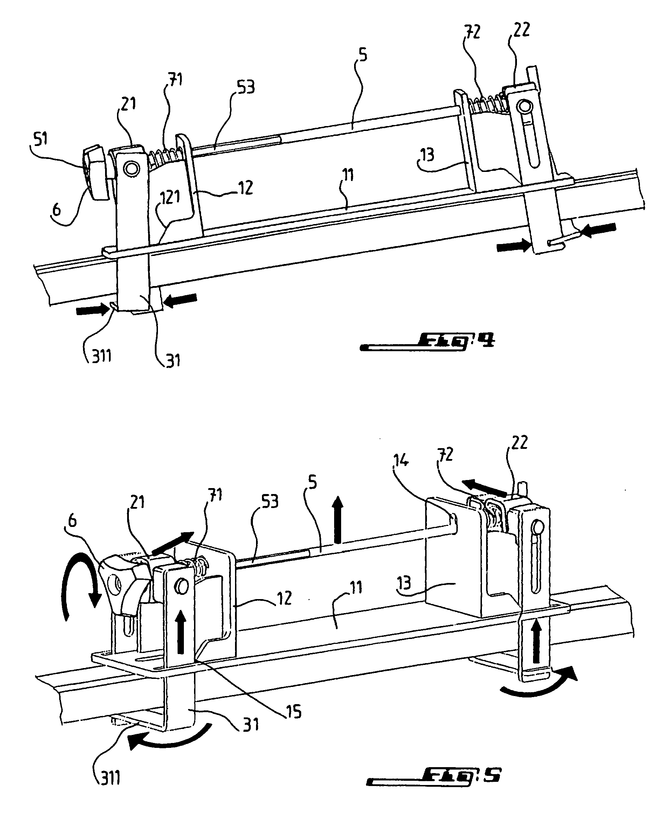

Lorsque le dispositif de l'invention a été pivoté pour obtenir la position représentée sur la figure 3, on ferme les boucles formées par les brides de fixation 31, 32 et les pattes de fermeture 41, 42 en faisant descendre les pattes de fermeture, comme cela est indiqué par deux flèches sur la figure 3. De plus, on engage les pattes de fermeture 41, 42 dans les brides de fixation 31, 32 grâce à des encoches 313, 323 prévues à cet effet, comme le montre les figures 2 et 3. Les mouvements d'engagement des brides de fixation avec les pattes de fermeture sont représentées plus particulièrement sur la figure 4 et indiqués par les flèches d'orientations opposées.

Le maintien en position fermée des brides de fixation avec les pattes de fermeture correspondantes est assuré par le serrage du dispositif de l'invention, et notamment quand les brides de fixation et les pattes de fermeture sont en contact respectivement avec la barre de toit T et une butée 15.

Pour serrer le dispositif de l'invention, on fait tourner le bouton 6 sur la partie filetée 53 de la barre de serrage 5, comme cela est indiqué sur la figure 5 par une flèche semi-circulaire. Dans la mesure où le bouton 6 avance sur la barre de serrage 5 en direction vers le support 12, les coulisseaux 21, 22, et avec eux les extrémités supérieures respectivement des brides de fixation 31, 32 et des pattes de fermeture 41, 42, s'approchent les uns des autres et compriment en même temps les ressorts de rappel 71, 72. L'avancement du coulisseau 21 sur la barre de serrage 5 octroie aux brides de fixation 31, 32 et aux pattes de fermeture 41, 42, qui sont en liaison pivot avec les coulisseaux 21, 22, les mouvements de montée et de basculement indiqués par les flèches de la figure 5. Ces différents mouvements verticaux et horizontaux combinés avec un mouvement de rotation ou de basculement des brides de fixation 31, 32 et des pattes de fermeture 41, 42 créent l'effet de l'arc-boutement. Ce mouvement s'effectue jusqu'à ce que des arrêtes 313, 323 (voir figures 2 et 3) des brides 31, 32 viennent en contact avec la barre de toit T. En continuant à serrer le dispositif de l'invention, les arrêtes 313, 323 s'enfoncent légèrement dans la barre de toit, éliminant ainsi tout mouvement de translation du dispositif de fixation par rapport à la barre de toit suivant le sens longitudinal de la barre de toit.

A l'inverse, pour démonter le système de fixation, on desserre le bouton 6. Le dispositif de fixation retrouve alors automatiquement sa configuration d'avant serrage grâce aux ressorts de rappel 71, 72.

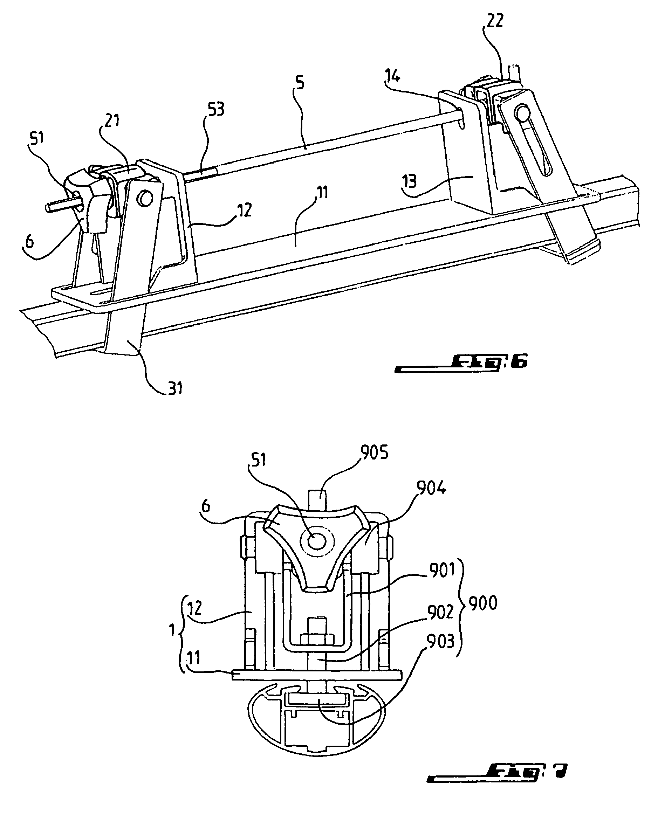

La position finale du dispositif serré est représentée sur la figure 6.

Selon un second mode de réalisation représenté sur la figure 7, le dispositif de fixation comprend un corps principal 1 comportant une plaque de base 11 et des supports 12, 13, ainsi qu'une première bride de fixation et une seconde bride de fixation à chacune des extrémités opposées de la plaque de base avec, pour chaque bride de fixation, une extrémité inférieure libre et une extrémité supérieure.

Le dispositif de fixation selon le second mode de réalisation, représenté sur la figure 7, est destiné à fixer un accessoire de portage sur une barre de toit ayant une rainure en T. Ce dispositif présente la même structure générale que celui selon le premier mode de réalisation, mais diffère de ce dernier par la forme et le type d'engagement des brides de fixation et notamment de leurs extrémités inférieures libres. Ainsi, les brides de fixation du dispositif de fixation selon le second mode de réalisation sont référencées, de manière identique pour la première et la seconde bride de fixation, 900 pour la bride entière. Chacune de ces brides 900 comporte une bride en U 901, et une partie en T comportant une tige 902 et une tête 903. Chacune des brides de fixation 900 est montée pivotant sur un coulisseau 904 enfilé sur une barre de serrage 5 conformée pour obtenir respectivement la fixation et le démontage de l'accessoire de portage en faisant varier l'espace entre des extrémités supérieures 905 des brides de fixation 900 et en faisant ainsi arc-bouter les brides de fixation 900.

Comme dans le premier mode de réalisation de l'invention, la barre de serrage est au moins partiellement pourvue d'un filetage 53 et présente une première extrémité 51 sur laquelle est engagé un élément de manipulation 6 tel un bouton moleté, et une seconde extrémité 52 solidaire d'un second coulisseau 22 auquel est attaché pivotant une des deux brides de fixation, l'autre bride de fixation étant attachée à un premier coulisseau 904 enfilé sur la barre de serrage 5.

Quelle que soit la conception précise des brides de fixation 900, notamment qu'elles soient réalisées en trois parties comme représenté sur la figure 7 ou qu'elles soient réalisées en une seule pièce, l'essentiel est qu'elles comportent une tête en T formant l'extrémité inférieure de la bride de fixation.

Lors de la fixation d'un accessoire de portage sur une barre de toit avec rainure en T, on glisse, dans un premier temps, les extrémités inférieures en T dans la rainure de la barre de toit. Pour serrer l'ensemble et notamment pour arc-bouter les brides de fixation, on procède comme décrit plus haut pour le dispositif de fixation selon le permier mode de réalisation. Il en est de même pour le démontage du dispositif de fixation.

## Revendications

1. Dispositif de fixation permettant de fixer un accessoire de portage sur une barre de toit (T) d'un véhicule automobile, le dispositif de fixation comportant une première (31) et une seconde (32) brides de fixation ayant chacune une extrémité inférieure libre (311, 321) et une extrémité supérieure (312, 322), les brides de fixation étant espacées l'une de l'autre et reliées à l'accessoire de portage, ainsi que des moyens de serrage (5, 6) permettant, ensemble avec les brides de fixation (31, 32), de fixer le dispositif sur une barre de toit (T) par interaction entre les extrémités inférieures libres (311, 321) des brides de fixation (31, 32) et la barre de toit (T),
**caractérisé en ce qu'**il comprend un corps principal (1) traversé par les première (31) et seconde (32) brides de fixation en deux trous (111, 112) disposés non pas au même bord dudit corps principal (1), mais diagonalement opposés, les première (31) et seconde (32) brides de fixation étant reliées l'une à l'autre, à leurs extrémités supérieures (312, 322), par une barre de serrage (5) faisant partie des moyens de serrage (5, 6) et étant conformée pour obtenir respectivement la fixation et le démontage de l'accessoire de portage en faisant varier l'espace entre les extrémités supérieures (311, 321) des première (31) et seconde (32) brides de fixation et en faisant ainsi arc-bouter les brides de fixation (31, 32).

2. Dispositif de fixation selon la revendication 1, **caractérisé en ce que** la barre de serrage (5) est au moins partiellement pourvue d'un filetage (53) et présente une première extrémité (51) sur laquelle est engagé un élément de manipulation (6) pourvu d'un taraudage approprié, et une seconde extrémité (52) solidaire d'un second coulisseau (22) auquel est attachée pivotant une (32) des deux brides de fixation (31, 32), l'autre bride de fixation (31) étant attachée à un premier coulisseau (21) enfilé sur la barre de serrage (5).

3. Dispositif de fixation selon la revendication 1 ou 2, **caractérisé en ce qu'**il comprend deux pattes de fermeture (4) destinées à coopérer avec les deux brides de fixation (31, 32) pour enfermer la barre de toit (T) entre elles (4) et les brides de fixation (31, 32) lorsque le dispositif de fixation est engagé sur la barre de toit (T).

4. Dispositif de fixation selon la revendication 2 ou 3, **caractérisé en ce que** l'élément de manipulation est un bouton (6) conformé pour pouvoir être actionné à la main, sans outil.

5. Dispositif de fixation selon l'une quelconque des revendications 1 à 4, **caractérisé en ce que** le corps principal (1) comprend une plaque de base (11) sur laquelle se dressent deux supports (12, 13) dont chacun est pourvu d'un orifice (14) destiné à loger la barre de serrage (5) et d'une rampe (121, 131) sur laquelle se déplace la bride de fixation (31 ou 32) correspondante lors de l'actionnement des moyens de serrage (5, 6) pour faire basculer les brides de fixation (31, 32).

6. Dispositif de fixation selon l'une quelconque des revendications 1 à 5, **caractérisé en ce que** le corps principal (1) fait partie intégrante de l'accessoire de portage.

7. Dispositif de fixation selon l'une quelconque des revendications 1 à 5, **caractérisé en ce que** le corps principal (1) est conformé pour être attaché de manière amovible à l'accessoire de portage.

8. Dispositif de fixation selon l'une quelconque des revendications 1 à 4, **caractérisé en ce que** les moyens de serrage (5, 6) sont conformés pour rapprocher les deux extrémités supérieures (312, 322) des brides de fixation (31, 32) l'une à l'autre afin d'obtenir la fixation de l'accessoire de portage et pour éloigner les deux extrémités (312, 322) l'une de l'autre afin d'obtenir le démontage de l'accessoire de portage.

## Claims

1. A fixing device for fixing a carrying accessory on a roof rack (T) of a motor vehicle, the fixing device comprising a first (31) and a second (32) fixing flange, each having a free lower end (311, 321) and an upper end (312, 322), the fixing flanges being spaced from one another and connected to the carrying device, as well as clamping means (5, 6) hallowing in conjunction with the fixing flanges (31, 32) for the device to be fixed on a roof rack (T) through the interaction between the free lower ends (311, 321) of the fixing flanges (31, 32) and the roof rack (T),
**characterized in that** it comprises a main body (1), which the first (31) and second (32) fixing flanges cross at two holes (111, 112) arranged not at the same edge of said main body (1), but while being diagonally opposed, the first (31) and second (32) fixing flanges being connected to each other, at the upper ends (312, 322) thereof, through a clamping rod (5) belonging to the clamping means (5, 6) and shaped to achieve respectively fixing and disassembly of the carrying accessory by varying the gap between the upper ends (311, 321) of the first (31) and second (32) fixing flanges and thus making the fixing flanges (31, 32) arch.

2. The fixing device according to claim 1, **characterized in that** the clamping rod (5) is at least partially provided with a male thread (53) and has a first end (51) at which a handling member (6) is engaged, provided with an appropriate female thread, and a second end (52) integral with a second slider (22) to which one (32) of the two fixing flanges (31, 32) is attached pivotingly, the other fixing flange (31) being attached to a first slider (21) slipped on to the clamping rod (5).

3. The fixing device according to claim 1 or 2, **characterized in that** it comprises two closing tabs (4) for cooperating with the two fixing flanges (31, 32) in order to enclose the roof rack (T) therebetween (4) and the fixing flanges (31, 32) when the fixing device is engaged on the roof rack (T).

4. The fixing device according to claim 2 or 3, **characterized in that** the handling member is a knob (6) shaped so that it can be actuated by hand, without a tool.

5. The fixing device according to any of claims 1 to 4, **characterized in that** the main body (1) comprises a base plate (11) on which two stays (12, 13) are standing, each of which is provided with an orifice (14) for housing the clamping rod (5) and with a ramp (121, 131) on which the corresponding fixing flange (31 or 32) is moving when the clamping means (5, 6) are actuated for tilting the fixing flanges (31, 32).

6. The fixing device according to any of claims 1 to 5, **characterized in that** the main body (1) is part of the carrying accessory.

7. The fixing device according to any of claims 1 to 5, **characterized in that** the main body (1) is shaped to be removably attached to the carrying accessory.

8. The fixing device according to any of claims 1 to 4, **characterized in that** the clamping means (5, 6) are shaped to move the two upper ends (312, 322) of the fixing flanges (31, 32) closer to each other in order to achieve fixing of the carrying accessory and to move the two ends (312, 322) away from each other in order to achieve disassembly of the carrying accessory.

## Patentansprüche

1. Befestigungsvorrichtung zum Befestigen einer Tragausrüstung auf einem Dachgepäckträger (T) eines Kraftfahrzeugs, wobei die Befestigungsvorrichtung einen ersten (31) und einen zweiten (32) Befestigungsflansch umfasst, die jeweils ein freies unteres Ende (311, 321) und ein oberes Ende (312, 322) aufweisen, wobei die Befestigungsflansche von einander beabstandet und mit der Tragausrüstung verbunden sind, sowie Einspannmittel (5, 6), die zusammen mit den Befestigungsflanschen (31, 32) die Befestigung der Vorrichtung auf einem Dachgepäckträger (T) durch die Wechselwirkung zwischen den freien unteren Enden (311, 321) der Befestigungsflansche (31, 32) und dem Dachgepäckträger (T) ermöglichen,
**dadurch gekennzeichnet, dass** sie einen Hauptkörper (1) umfasst, durch den die ersten (31) und zweiten (32) Befestigungsflansche in zwei Löchern (111, 112) gehen, die nicht an demselben Rand des Hauptkörpers (1) sondern diagonal gegenüberliegend angeordnet sind, wobei die ersten (31) und zweiten (32) Befestigungsflansche an ihren oberen Enden (312, 322) miteinander durch einen Einspannschaft (5) verbunden sind, der zu den Einspannmitteln (5, 6) gehört und ausgestaltet ist, um jeweils die Befestigung und das Abnehmen der Tragausrüstung durch Verändern des Raums zwischen den oberen Enden (311, 321) der ersten (31) und zweiten (32) Befestigungsflansche zu ermöglichen und somit die Befestigungsflansche (31, 32) zur Abstrebung zu bringen.

2. Befestigungsvorrichtung nach Anspruch 1, **dadurch gekennzeichnet, dass** der Einspannschaft (5) mindestens teilweise mit einem Außengewinde (53) versehen ist und ein erstes Ende (51), an dem ein Handhabungselement (6) eingreift, das mit einem geeigneten Innengewinde versehen ist, und ein zweites Ende (52) aufweist, das mit einem zweiten Läufer (22) einstückig ist, an dem einer (32) der beiden Befestigungsflansche (31, 32) drehbar befestigt ist, wobei der andere Befestigungsflansch (31) an einem ersten Läufer (21) angebracht ist, der auf den Einspannschaft (5) aufgeschoben wird.

3. Befestigungsvorrichtung nach Anspruch 1 oder 2, **dadurch gekennzeichnet, dass** sie zwei Verschlusslaschen (4) umfasst, die dazu gedacht sind, um mit den beiden Befestigungsflanschen (31, 32) zusammenzuwirken, um den Dachgepäckträger (T) zwischen diesen (4) und den Befestigungsflanschen (31, 32) einzuschließen, wenn die Befestigungsvorrichtung in Eingriff mit dem bachgepäckträger (T) gebracht wird.

4. Befestigungsvorrichtung nach Anspruch 2 oder 3, **dadurch gekennzeichnet, dass** das Handhabungselement ein Knopf (6) ist, der ausgestaltet ist, so dass er von Hand ohne Werkzeug betätigt werden kann.

5. Befestigungsvorrichtung nach einem der Ansprüche 1 bis 4, **dadurch gekennzeichnet, dass** der Hauptkörper (1) eine Grundplatte (11) aufweist, auf der sich zwei Stützen (12, 13) erheben, von denen jede mit einer öffnung (14), die dazu gedacht ist, den Einspannschaft (5) unterzubringen, und mit einer Rampe (121, 131) versehen ist, auf der sich der entsprechende Befestigungsflansch (31 oder 32) bewegt, wenn die Einspannmittel (5, 6) betätigt werden, um die Befestigungsflansche (31, 32) zu kippen.

6. Befestigungsvorrichtung nach einem der Ansprüche 1 bis 5, **dadurch gekennzeichnet, dass** der Hauptkörper (1) Teil der Tragausrüstung ist.

7. Befestigungsvorrichtung nach einem der Ansprüche 1 bis 5, **dadurch gekennzeichnet, dass** der Hauptkörper (1) ausgestaltet ist, um abnehmbar an der Tragausrüstung angebracht zu werden.

8. Befestigungsvorrichtung nach einem der Ansprüche 1 bis 4, **dadurch gekennzeichnet, dass** die Einspannmittel (5, 6) ausgestaltet sind, um die beiden oberen Enden (312, 322) der Befestigungsflansche (31, 32) einander näher zu bringen, um die Befestigung der Tragausrüstung zu erreichen, und um die beiden Enden (312, 322) voneinander zu entfernen, um das Abnehmen der Tragausrüstung zu erreichen.
